# EUROPEAN PATENT APPLICATION

(11) **EP 4 354 461 A1**
(43) Date of publication of application: **17.04.2024**
(21) Application number: 21945279.4
(22) Date of filing: 20.08.2021
(51) Int. Cl.: G21C 21/00, G21C 3/62, G21C 3/04

(54) **METHOD FOR PREPARING UO2 MIXTURE POWDER FOR NUCLEAR FUEL MANUFACTURING BY MEANS OF IBC BLENDER, AND UO2 MIXTURE POWDER FOR NUCLEAR FUEL MANUFACTURING, PREPARED THEREBY**

(30) Priority: 10.06.2021 KR 20210075397
(71) Applicant: Kepco Nuclear Fuel Co., Ltd., Daejeon 34057 (KR)
(72) Inventor: JO, Bohyun, Daejeon 34304 (KR); CHOI, Hui Sung, Dalbit-ro Sejong 30100 (KR); CHO, Dong Hyun, Daejeon 35205 (KR); SON, Ji Hwan, Daejeon 35205 (KR); PARK, Junseok, Daejeon 35351 (KR)
(74) Representative: Cabinet Netter
(86) International application number: PCT/KR2021/011124
(87) International publication number: WO 2022/260212

(57) **Abstract**

According to a method for preparing a UO₂ mixture powder for nuclear fuel manufacturing, of the present invention, mixing time is short, and degrees of mixing and homogeneity of a prepared UO₂ mixture powder are excellent. The present invention relates to a method for preparing a UO₂ mixture powder for nuclear fuel manufacturing, and provides a method for preparing a UO₂ mixture powder for nuclear fuel manufacturing, comprising the steps of: (a) weighing and sieving, by means of an automatic injection device, a UO₂ powder, a porogen and a lubricant, and injecting same into a UC container; and (b) mixing the UO₂ powder, the porogen and the lubricant by means of an IBC blender.

## Description

### Technical Field

The present disclosure relates to a method of preparing UO₂ powder mixture for nuclear fuel manufacturing using an IBC blender and a UO₂ powder mixture for nuclear fuel manufacturing prepared thereby.

### Background Art

Typically, uranium dioxide (UO₂) pellets are widely used as nuclear fuel used in nuclear power plants.

UO₂ pellets, used as nuclear fuel, are manufactured from UO₂ powder. More specifically, UO₂ pellets are manufactured through the following steps: preparing a UO₂ powder mixture by mixing UO₂ powder with additives, such as porogens and lubricants; manufacturing a UO₂ molded pellet by pressing the prepared UO₂ powder mixture; manufacturing a UO₂ sintered pellet by sintering the manufactured UO₂ molded pellet; and manufacturing a UO₂ ground pellet by grinding the sintered pellet so that the sintered pellet maintains a uniform diameter.

In the preparation step of the UO₂ powder mixture, a porogen and a lubricant are typically added and mixed using a mixing device to improve the fluidity of the powder and the properties of the finally manufactured pellets. The degrees of mixing and homogeneity resulting from mixing greatly affect the properties and quality of the finally manufactured pellets. For this reason, the performance of the mixing device with which the powder is mixed is significantly important in the preparation step of the UO₂ powder mixture.

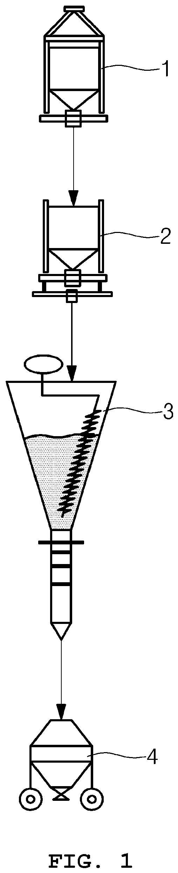

In existing methods of preparing a UO₂ powder mixture for nuclear fuel manufacturing, a screw mixer is typically used. As shown in FIG. 1, an operator manually weighs and sieves additives to inject the weighed and sieved additives into a UC container 1, equips a Fit-Up device 2 located at the top of the screw mixer with the UC container, mixes the additives using the screw mixer 3, and then stores the resulting powder mixture in a separate container 4.

The existing method of preparing the UO₂ powder mixture for nuclear fuel manufacturing requires about 4 hours of mixing time, which is time-consuming because the lubricant is required to be added several times in the mixing process to ensure homogeneous distribution of the lubricant. In addition, work continuity is poor, and workers need to be on standby to add the lubricant. Furthermore, due to the nature of the nuclear fuel manufacturing method that handles nuclear materials, several problems in terms of economic feasibility, efficiency, and safety occur.

### [Document of related art]

Korean Patent Application Publication No. 10-2004-0029408 (2004.04.06)
Korean Patent No. 10-1001202 (2010.12.08)

### Disclosure

### Technical Problem

The present disclosure aims to provide a method of preparing a UO₂ powder mixture for nuclear fuel manufacturing, in which mixing takes a short time, and the degrees of mixing and homogeneity of a prepared UO₂ powder mixture are excellent.

### Technical Solution

The present disclosure provides a method of preparing a UO₂ powder mixture for nuclear fuel manufacturing, which includes (a) weighing and sieving a porogen and a lubricant using an automatic injection device and injecting the weighed and sieved porogen and lubricant into a UC container containing UO₂ powder, and (b) mixing the UO₂ powder, the porogen, and the lubricant using an IBC Blender.

The porogen may be U₃O₈ powder or azodicarbonamide (ADCA, C₂H₄N₄O₂).

The lubricant may be Acrawax (ethylene distearamide, C₃₈H₇₆N₂O₂) or zinc stearate (Zn-C₃₆H₇₀O₄).

The UO₂ powder may be contained in an amount of 10 to 500 kg. In addition, 0.08 to 10 parts by weight of the porogen and 0.05 to 1 part by weight of the lubricant may be contained with respect to 100 parts by weight of the UO₂ powder.

The automatic injection device may include a 300-µm sieving machine and remove granules present in the porogen and the lubricant. In addition, the porogen and the lubricant may be added to the automatic injection device in a weight ratio set according to the weight of the UO₂ powder.

In the (b) mixing, forward mixing may be performed under conditions in which a rotation speed is in a range of 10 to 14 rpm, a container filling rate of the powder is in a range of 50 to 70 vol%, and a mixing time is in a range of 20 to 30 minutes.

The (b) mixing may further include performing backward mixing for 10 minutes.

In addition, the present disclosure may provide a UO₂ powder mixture for nuclear fuel manufacturing, the powder mixture prepared by the method of preparing the UO₂ powder mixture for nuclear fuel manufacturing.

Furthermore, the present disclosure may provide a method of manufacturing UO₂ nuclear fuel, which includes: manufacturing a UO₂ molded pellet by pressing the UO₂ powder mixture for nuclear fuel manufacturing; manufacturing a UO₂ sintered pellet by sintering the UO₂ molded pellet; and manufacturing a UO₂ ground pellet by grinding the sintered pellet so that the sintered pellet maintains a uniform diameter, in which a defect rate is 5% or less, and the sintered pellet has a density of 10.30 to 10.58 g/cm³.

### Advantageous Effects

According to a method of preparing a UO₂ powder mixture for nuclear fuel manufacturing of the present disclosure, mixing takes a short time, and the degrees of mixing and homogeneity of a prepared UO₂ powder mixture are excellent.

When using the UO₂ powder mixture for nuclear fuel manufacturing, prepared according to the method of preparing the UO₂ powder mixture for nuclear fuel manufacturing of the present disclosure, a finally manufactured UO₂ pellet has excellent properties and quality.

### Description of Drawings

FIG. 1 is a diagram illustrating a method of mixing a UO₂ powder using a currently available screw mixer;

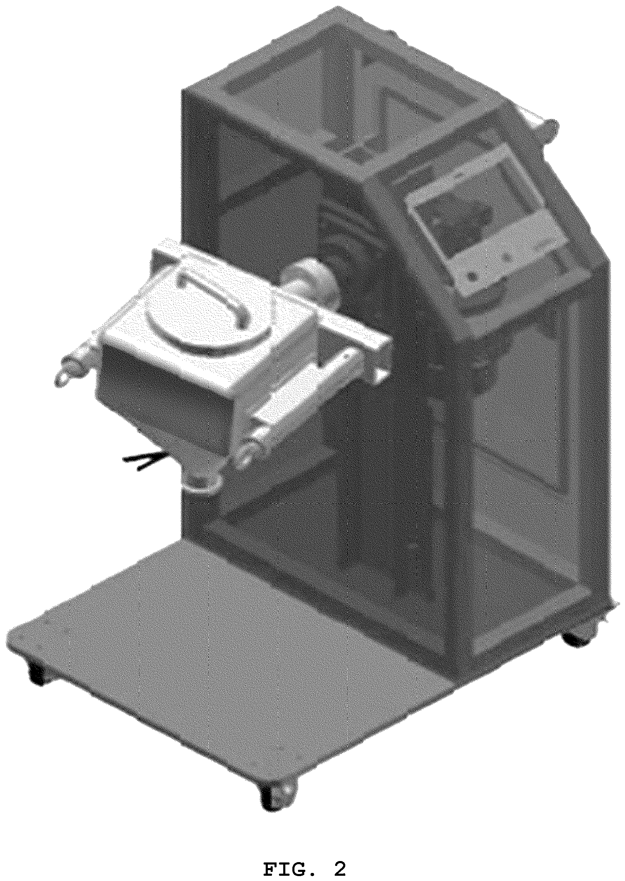

FIG. 2 is a diagram illustrating the configuration of an IBC blender used in the present disclosure;
FIG. 3 is a diagram showing Zn content and deviation in a UO₂ powder mixture with varying mixing conditions of an IBC blender at a rotation speed of 10 rpm;
FIG. 4 is a diagram showing Zn content and deviation in a UO₂ powder mixture with varying mixing conditions of an IBC blender at a rotation speed of 14 rpm; and
FIG. 5 is a diagram illustrating the configuration of an automatic additive injection device that automatically injects additives into a UC container containing a UO₂ powder, in which powder mixing is performed while an IBC blender is equipped with the UC container of FIG. 2.

### Best Mode

Hereinafter, the present disclosure will be described in more detail through embodiments, examples, and drawings. These embodiments and examples are disclosed only for illustrating the present disclosure, and it will be apparent to those skilled in the art that the scope of the present disclosure is not to be construed as limited by these embodiments and examples.

According to one embodiment, the present disclosure provides a method of preparing a UO₂ powder mixture for nuclear fuel manufacturing, which includes (a) weighing and sieving a porogen and a lubricant using an automatic injection device and injecting the weighed and sieved porogen and lubricant into a UC container containing UO₂ powder, and (b) mixing the UO₂ powder, the porogen, and the lubricant using an IBC Blender.

The UO₂ powder is a starting material for preparing the UO₂ powder mixture for nuclear fuel manufacturing and manufacturing nuclear fuel pellets. In one embodiment of the present disclosure, the UO₂ powder has a specific surface area of 2.6 to 2.7 m²/g and an average particle size of 4.0 to 10 µm. In one embodiment of the present disclosure, the UO₂ powder may be used in an amount of 10 to 500 kg.

When manufacturing a molded pellet using the UO₂ powder mixture and sintering the molded pellet to manufacture a sintered pellet, the porogen is an agent that enables the sintering density of the sintered pellet to be controlled and the size of pores inside the sintered pellet to be adjusted. As the porogen, U₃O₈ powder or azodicarbonamide (ADCA, C₂H₄N₄O₂) may be used. The porogen may be contained in an amount of 0.08 to 10 parts by weight with respect to 100 parts by weight of the UO₂ powder.

The lubricant, an agent added to form a thin film on UO₂ powder particles, improves the fluidity of the powder particles not only to regulate the amount charged into a die during powder molding but also to increase the production speed of the molded pellet. In addition, during the powder molding, the pressure between the powder particles and the frictional pressure between the powder particles and die walls may be reduced to achieve a desired molding density at the optimal molding pressure, which has the effect of extending the life cycle of die and punch. Acrawax (ethylene distearamide, C₃₈H₇₆N₂O₂) or zinc stearate (Zn-C₃₆H₇₀O₄) may be used as the lubricant. The lubricant may be contained in an amount of 0.05 to 1 part by weight with respect to 100 parts by weight of the UO₂ powder.

The intermediate bulk container blender (IBC blender) refers to a blender that mixes the contents by rotating the container itself in various directions.

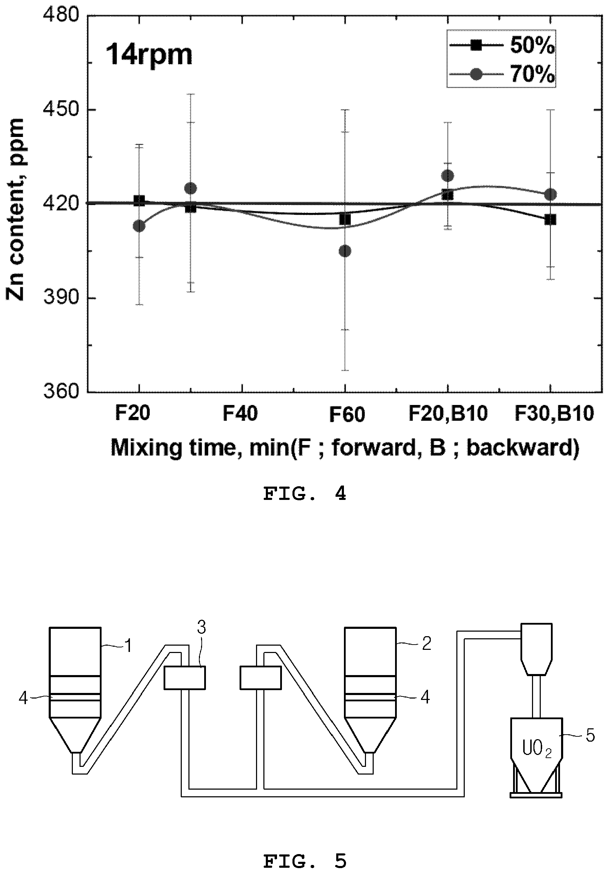

The automatic injection device is a device that weighs and sieves the porogen and the lubricant and injects the weighed and sieved porogen and lubricant into the UC container containing the UO₂ powder. The automatic injection device may include a 300-µm sieving machine and remove granules present in the porogen and the lubricant. The automatic injection machine is illustrated in FIG. 5. As illustrated in FIG. 5, the automatic injection device includes a first additive injection device 1, a second additive injection device 2, and an additive weighing device 3. In addition, the respective additive injection devices include the 300-µm sieving machine 4. The UC container refers to a standard container (Uranium-C (standard order) container) having a capacity of 700 liters, certified by the Korea Institute of Nuclear Safety, which is capable of handling uranium powder with a maximum enrichment of 5.0 w/o. The 300-µm sieving machine 4 is a sieving machine capable of removing substances, such as particles and granules having a size exceeding 300 µm.

In the (b) mixing, forward mixing may be performed under conditions in which a rotation speed is in a range of 10 to 14 rpm, a container filling rate of the powder is in a range of 50 to 70 vol%, and a mixing time is in a range of 20 to 30 minutes. The (b) mixing may further include performing backward mixing for 10 minutes.

One embodiment of the present disclosure may provide a method of manufacturing a UO₂ nuclear fuel, which includes: manufacturing a UO₂ molded pellet by pressing the UO₂ powder mixture for nuclear fuel manufacturing; manufacturing a UO₂ sintered pellet by sintering the UO₂ molded pellet; and manufacturing a UO₂ ground pellet by grinding the sintered pellet so that the sintered pellet maintains a uniform diameter, in which a defect rate is 5% or less, and the sintered pellet has a density of 10.30 to 10.58 g/cm³.

The "defect rate" used herein means the number of defective pellets generated in each step among all the pellets manufactured through the molding, sintering, and grinding processes using the UO₂ powder mixture. The pellet that does not meet the design conditions or specifications is determined as being defective.

### Example 1

To further improve the degrees of mixing and homogeneity of a UO₂ powder mixture for nuclear fuel manufacturing, research was conducted by performing a mixing method using an IBC blender with varying conditions.

For the research, a predetermined amount of U₃O₈ powder (in this case, 5 parts by weight with respect to 100 parts by weight of UO₂ powder) prepared by oxidizing pellet scraps generated in a UO₂ pellet manufacturing process was added to UO₂ powder and then mixed. When adding and mixing the U₃O₈ powder, the scraps are not only able to be recycled, thereby improving economic feasibility, but also act as a porogen, thereby controlling the density of the UO₂ pellets as well as the size and number of pores present inside the pellets depending on the amount added. In addition, to improve the formability of the pellets and the fluidity of the powder affecting the quality of the pellets, a predetermined amount of a lubricant (in this case, 0.4 parts by weight with respect to 100 parts by weight of the UO₂ powder and U₃O₈ powder; 0.38 parts by weight with respect to 100 parts by weight of UO₂ powder) was added and then mixed. Zn-stearate (Zn-C₃₆H₇₀O₄) powder was used as the lubricant. The Zn content was 10% in the Zn-stearate. In addition, the Zn content in the (UO₂ + U₃O₈) powder was measured to be about 20 ppm. Therefore, when adding 0.4 parts by weight of the Zn-stearate to the (UO₂ + U₃O₈) powder with respect to 100 parts by weight of the UO₂ powder and U₃O₈ powder, the Zn content in the powder mixture is theoretically 420 ppm.

To verify the mixing performance of the IBC blender, the mixing time, mixing direction (forward and backward), container filling rate, and rotation speed of the IBC blender were set as the variables of the performance conditions. The container filling rate is expressed as vol% of the powder volume with respect to the total container volume. The content analysis and deviation measurement of the Zn contained in the powder mixture were performed. To this end, a single powder mixture was prepared for each performance condition, and 5 samples were collected from each powder mixture to measure the Zn content and deviation. The Zn content was measured by an inductively coupled plasma-optical emission spectroscopy (ICP-OES). The degree of mixing was evaluated by comparing the measured Zn content and the theoretical Zn content, and the degree of homogeneity was evaluated through the deviation of the measured Zn content.

The degree of mixing refers to the degree to which the additives are mixed. The better the mixing, the closer the measured degree of mixing is to the theoretical Zn content. The lower the degree of mixing, the more the unmixed additives.

The degree of homogeneity refers to how evenly the additives present in the powder mixture are mixed. In this specification, the degree of homogeneity was evaluated through the deviation of the measured Zn content, indicating the lower the deviation, the better the degree of homogeneity.

Table 1 below shows the Zn content and deviation in the UO₂ powder mixture depending on each performance condition.

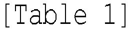

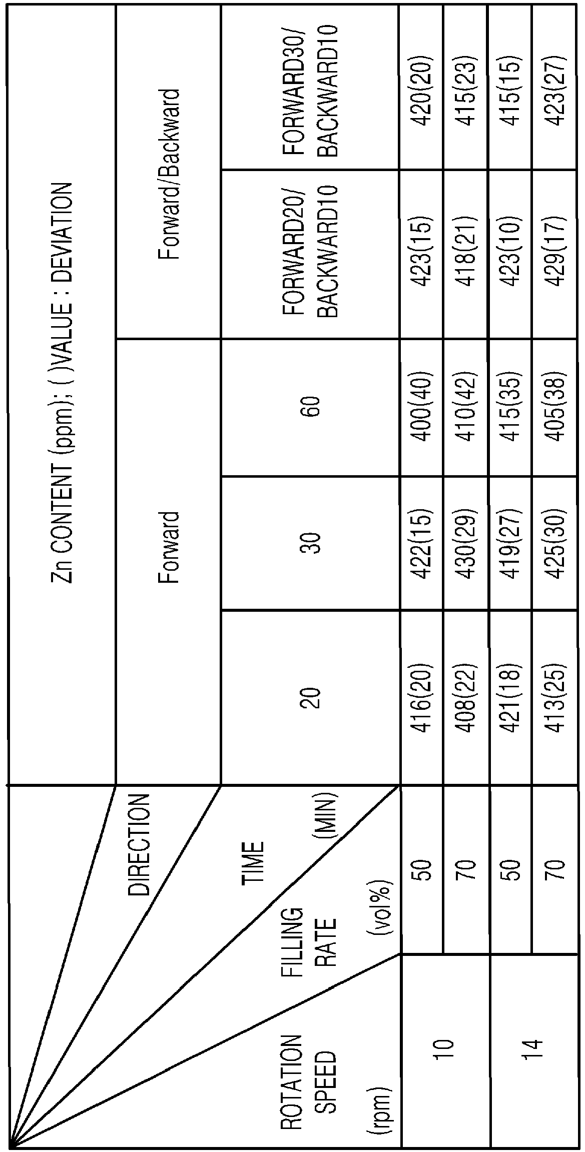

The forward and backward rotation mean relatively opposite directions to each other. The forward may mean a clockwise or counterclockwise direction, and the backward may mean a counterclockwise or clockwise direction, which is opposite to the forward direction.

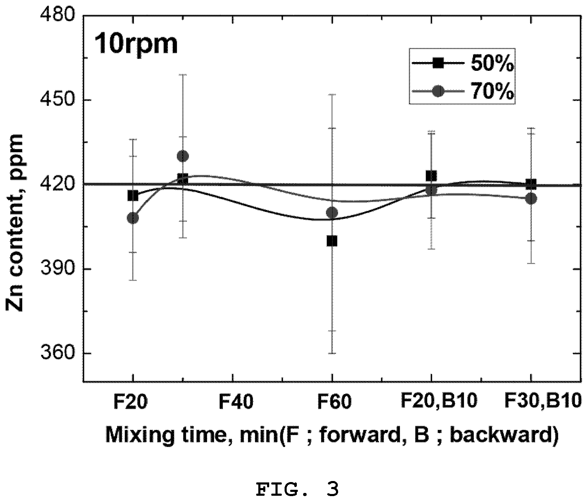

FIGS. 3 and 4 each independently show the results of Table 1 above depending on the rotation speed.

FIG. 3 shows the performance results at an IBC blender rotation speed of 10 rpm. As shown in FIG. 3, in the case of performing only the forward mixing in the IBC blender at a rotation speed of 10 rpm, the average Zn contents of the samples each independently mixed for 20 and 30 minutes were measured to be 416 rpm and 422 rpm, respectively, which were close to the theoretical value (420 ppm), indicating that the deviations were small. However, the average Zn content was closer to the theoretical value, and the deviation was smaller at a mixing time of 30 minutes rather than at a mixing time of 20 minutes. On the other hand, when the mixing time exceeded 30 minutes and increased to 60 minutes, the average Zn content shifted far away from the theoretical value, indicating that the deviation also increased. This is because the excessively increased mixing time leads to the segregation of some of the added substances.

On the other hand, as a result of further performing backward rotation for 10 minutes after forward rotation, the measurement values were much closer to the theoretical value than those when performing only the forward mixing, not to mention that the deviations were found to be smaller. This is because when performing rotation in one direction for a predetermined time and then performing rotation in the opposite direction, there are fewer unmixed added substances. On the other hand, such results were almost similar regardless of the filling rate. However, a filling rate of 50% is superior in degree of homogeneity to a filling rate of 70%, so the filling rate is preferably set to 50%.

FIG. 4 shows the performance results in the IBC blender at a rotation speed of 14 rpm. As shown in FIG. 4, in the case of performing only the forward mixing in the IBC blender at a rotation speed of 14 rpm, the average Zn contents of the samples each independently mixed for 20 and 30 minutes were measured to be 421 rpm and 419 rpm, respectively, which were close to the theoretical value (420 ppm), not to mention that the deviation was small. However, the average Zn content was closer to the theoretical value, and the deviation was smaller at a mixing time of 30 minutes rather than at a mixing time of 20 minutes. On the other hand, when the mixing time exceeded 30 minutes and increased to 60 minutes, the average Zn content shifted far away from the theoretical value, indicating that the deviation also increased. This is because the excessively increased mixing time leads to the segregation of some of the added substances.

On the other hand, as a result of further performing backward rotation for 10 minutes after forward rotation, the measurement values were closer to the theoretical value than those when performing only the forward mixing, not to mention that the deviations were found to be smaller. This is because when performing rotation in one direction for a predetermined time and then performing rotation in the opposite direction, there are fewer unmixed added substances. On the other hand, such results were almost similar regardless of the filling rate. However, a filling rate of 50% is superior in degree of homogeneity to a filling rate of 70%, so the filling rate is preferably set to 50%.

### Example 2

The properties of UO₂ pellets manufactured from UO₂ powder mixtures prepared by an existing method of preparing a UO₂ powder mixture for nuclear fuel manufacturing and a method of preparing a UO₂ powder mixture for nuclear fuel manufacturing of the present disclosure are compared.

Among the process of manufacturing UO₂ pellets from UO₂ powder, all processes other than the process of preparing the UO₂ powder mixtures for nuclear fuel manufacturing were performed in the same manner. The results of comparing the existing preparation method and the preparation method of the present disclosure are shown in Table 2 below.

In the existing method of preparing the UO₂ powder mixture for nuclear fuel manufacturing and the method of preparing the UO₂ powder mixture for nuclear fuel manufacturing of the present disclosure, the amount of (UO₂ + U₃O₈) powder in each mixer was 50 kg, and a lubricant powder was added in an amount of 200 g (= 0.4 parts by weight). Other mixing conditions are shown in Table 2 below.

In addition, to compare the physical properties of molded pellets and sintered pellets manufactured from the UO₂ powder mixtures prepared according to the existing preparation method and the preparation method of the present disclosure, 100 of each pellet was manufactured.

The UO₂ powder mixtures were pressed by filling punch and die to manufacture the molded pellets, and the manufactured molded pellets were subjected to heat treatment in a gas environment for a predetermined time to manufacture the sintered pellets.

Considering the fluidity of the powder, only the length was measured in the case of the molded pellets, and the deviation thereof was calculated. The impact on diameter was not considered because the molded pellets were manufactured using the punch and die having the same diameter. In the case of the sintered pellets, the length, diameter, and density were measured, and the respective deviations thereof were calculated.

**[Table 2]**

| Classification | | | Existing | Novel |
|---|---|---|---|---|
| Mixer | | | Screw mixer | IBC blender |
| Powder | Mixing condition | Mixing direction and time | Forward mixing (orbital and rotational) for 2 hours | Forward mixing for 30 minutes + backward mixing for 10 minutes |
| | | Lubricant injection method | Added three times | Added once initially |
| | | Worker | On standby | Rearranged |
| Molded pellet | Length deviation (mm) | | 9.00 ± 1.5 | 9.00 ± 1.0 |
| Sintered pellet | Length deviation (mm) | | 9.00 ± 1.3 | 9.00 ± 0.8 |
| | Diameter deviation (mm) | | 8.00 ± 0.05 | 8.00 ± 0.03 |
| | Density deviation (g/cm³) | | 10.45 ± 0.20 | 10.45 ± 0.10 |
| | (theoretical density of UO₂, %TD: 10.96 g/cm³) | | (93.52% to 97.17%TD) | (94.43% to 96.26%TD) |
| | Mirostructure | | Partially existing coarse pores | Homogeneously distributed micropores |
| Producti vity | Defect rate (%) | | 5 to 10 | 3 to 5 |

As shown in Table 2, it was confirmed that the molded pellet and sintered pellet manufactured from the UO₂ powder mixture for nuclear fuel manufacturing of the present disclosure were superior in properties to the molded pellet and sintered pellet manufactured from the UO₂ powder mixture for nuclear fuel manufactured using the screw mixer. More specifically, in the case of the molded pellet and sintered pellet manufactured from the UO₂ powder mixture for nuclear fuel manufacturing, the fluidity of the UO₂ powder mixture was good, so the length deviations of the molded pellet and the sintered pellet were small, confirming that the density deviations were also small. While the quality standard for sintered pellets is based on 95.0% to 95.7% of the theoretical density, the density deviation of the sintered pellet manufactured according to the method of the present disclosure is smaller than the density deviation of the sintered pellet manufactured according to the existing method, so quality control is easy.

In addition, in the microstructure of the sintered pellet, micropores are confirmed to be homogeneously distributed, meaning that U₃O₈, acting as a porogen, is evenly distributed in the UO₂ powder mixture. Furthermore, there were no coarse pores because the lubricant was distributed homogeneously without being clustered. On the contrary, in the case of the sintered pellet manufactured from the UO₂ powder mixture for nuclear fuel manufacturing manufactured using the screw mixer, it is confirmed that some coarse pores exist in the microstructure, meaning that the porogen and the lubricant added to the UO₂ powder mixture fail to be evenly distributed.

The method of preparing the UO₂ powder mixture for nuclear fuel manufacturing of the present disclosure uses the IBC blender, thereby allowing the lubricant to be added only once initially, shortening mixing time, improving the degrees of homogeneity and mixing by preventing unmixed lubricant from being generated through backward rotation, improving the fluidity of the powder, and enabling continuous work. In addition, there is no need for workers to be on standby to add the lubricant, thus being excellent in economic feasibility, efficiency, and safety.

Furthermore, the defect rate in the UO₂ pellet manufacturing process appeared to be 5 to 10% in the case of the existing method (defect rate in the molding process: 1 to 2%, defect rate in the grinding process: 5 to 8%), and 3 to 5% in the case of the present disclosure (defect rate in the molding process: 0%, grinding process defect rate: 3 to 5%).

Typically, pellet defects occur mainly in a molding process, in which molded pellets are manufactured by pressing a UO₂ powder mixture, and a grinding process, in which sintered pellets are ground. Defects in the molding process occur because the molded pellets are damaged in the process of manufacturing a molded body or because the length of the molded pellets exceeds the specification range. Defects in the grinding process result from damage to cracks, pores, or unground parts on the surface of the ground pellets. In the molding process, the defect rate was 1 to 2% in the case of the existing method while in the case of the present disclosure, the defect rate was 0%. In addition, while the defect rate in the grinding process was 5 to 8%, the defect rate in the case of the present disclosure was 3 to 5%. The defect rate was low in the grinding pellets manufactured by applying the present disclosure because there were no unground parts on the surface of the pellets, and there was no damage resulting from the pores. There are no unground parts because a decrease in molding pressure due to friction is small when molding powder particles in which the lubricant is homogeneously dispersed. In addition, while damage resulting from the pores mainly occurs when the lubricant is clustered due to a poor degree of mixing and thus remains after the sintering process, such damage occurred less in the case of the pellets manufactured by the technology of the present disclosure.

As described above, the lubricant and the porogen are evenly distributed in the UO₂ powder mixture for nuclear fuel manufacturing prepared using the IBC blender. As a result, the molded pellet manufactured from the UO₂ powder mixture, the sintered pellet, and the ground pellet are much better in the properties and quality of the pellets.

As described above, in the case of mixing using the IBC blender device of the present disclosure, the degrees of mixing and homogeneity were better than those in the case of mixing using the existing screw mixer, showing that the finally manufactured UO₂ pellets were excellent in properties and quality.

## Claims

1. A method of preparing a UO₂ powder mixture for nuclear fuel manufacturing, the method comprising:
(a) weighing and sieving a porogen and a lubricant using an automatic injection device and injecting the weighed and sieved porogen and lubricant into a UC container containing UO₂ powder; and
(b) mixing the UO₂ powder, the porogen, and the lubricant using an IBC blender.

2. The method of claim 1, wherein the porogen is U₃O₈ powder or azodicarbonamide (ADCA, C₂H₄N₄O₂).

3. The method of claim 1, wherein the lubricant is Acrawax (ethylene distearamide, C₃₈H₇₆N₂O₂) or zinc stearate (Zn-C₃₆H₇₀O₄) .

4. The method of claim 1, wherein the UO₂ powder is contained in an amount of 10 to 500 kg, and
0.08 to 10 parts by weight of the porogen and 0.05 to 1 part by weight of the lubricant are contained with respect to 100 parts by weight of the UO₂ powder.

5. The method of claim 1, wherein the automatic injection device comprises a 300-µm sieving machine and removes granules present in the porogen and the lubricant, and
the porogen and the lubricant are added in a weight ratio set according to the weight of the UO₂ powder.

6. The method of any one of claims 1 to 5, wherein in the (b) mixing, forward mixing is performed under conditions in which a rotation speed is in a range of 10 to 14 rpm, a container filling rate of the power is in a range of 50 to 70 vol%, and a mixing time is in a range of 20 to 30 minutes.

7. The method of claim 6, wherein the (b) mixing further comprises performing backward mixing for 10 minutes.

8. A UO₂ powder mixture for nuclear fuel manufacturing, the powder mixture prepared by the method of claim 1.

9. A method of manufacturing a UO₂ nuclear fuel, the method comprising:
manufacturing a UO₂ molded pellet by pressing the UO₂ powder mixture of claim 8;
manufacturing a UO₂ sintered pellet by sintering the UO₂ molded pellet; and
manufacturing a UO₂ ground pellet by grinding the sintered pellet so that the sintered pellet maintains a uniform diameter,
wherein a defect rate is 5% or less, and the sintered pellet has a density of 10.30 to 10.58 g/cm³.
